# EUROPEAN PATENT APPLICATION

(11) **EP 4 750 214 A1**
(43) Date of publication of application: **27.05.2026**
(21) Application number: 23945908.4
(22) Date of filing: 20.07.2023
(51) Int. Cl.: H04W 76/10, H04W 24/04, H04W 84/06, H04W 88/06

(54) **TERMINAL AND WIRELESS COMMUNICATION METHOD**

(71) Applicant: NTT DOCOMO, INC., Tokyo 100-6150 (JP)
(72) Inventor: SHIMA, Kousuke, Tokyo 100-6150 (JP); OKAMURA, Masaya, Tokyo 100-6150 (JP); MATSUMURA, Yuki, Tokyo 100-6150 (JP); ECHIGO, Haruhi, Tokyo 100-6150 (JP)
(74) Representative: Hoffmann Eitle
(86) International application number: PCT/JP2023/026612
(87) International publication number: WO 2025/017906

(57) **Abstract**

A terminal executes radio communication with a mobile communication network in a first state in which a specific communication quality in the mobile communication network is guaranteed and the mobile communication network is operating normally, and in a second state in which available radio resources are more limited than in the first state. In the second state, the terminal executes connection with the mobile communication network only when a specific condition is satisfied.

## Description

### TECHNICAL FIELD

The present disclosure relates to a terminal and a radio communication method supporting communication quality guarantee.

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

In 5G, realization of up to 99.9999% has been studied as reliability of Ultra-Reliable and Low Latency Communications (URLLC), but in 6G, a further one-digit improvement (99.99999%) is assumed as a target value (Non-Patent Literature 1).

### CITATION LIST

### NON-PATENT LITERATURE

Non-Patent Literature 1: NTT DOCOMO, "DOCOMO 6G White Paper, Version 5.0", [online], July 2023, Internet URL:https://www.docomo.ne.jp/binary/pdf/corporate/technology/whitepaper_6g/DO COMO_6G_White_PaperJP_20221116.pdf

### SUMMARY OF INVENTION

Mobile communication services in 5G and 6G including URLLC are basically public network type services intended for an unspecified number of users, and are basically provided on a best effort basis.

It has been regarded as a problem that a mobile communication network premised on such a best effort type service cannot cope with a short-term and explosive increase in traffic volume that may occur when terminals (User Equipment, UEs) are crowded in a specific area such as an event or concert venue.

In particular, in 6G, it is assumed that there will be many use cases requiring a certain communication quality guarantee, such as for specific industries. Considering such a situation, the importance of communication quality guarantee is further increasing not only for mission-critical cases but also for general users.

From the viewpoint of ensuring communication quality guarantee more reliably, it is also assumed that when a failure occurs in a Terrestrial Network (TN) widely used as a mobile communication network, it is substituted by a Non-Terrestrial Network (NTN). However, in such a case, since available radio resources are more limited than in normal times, how to continue communication quality guarantee for UEs becomes a problem.

Therefore, the following disclosure has been made in view of such a situation, and an object of the present disclosure is to provide a terminal and a radio communication method capable of continuing a certain communication quality guarantee even when a failure occurs in a mobile communication network and available radio resources are more limited than in normal times.

An aspect of the present disclosure is a terminal (UE 200) including a communication unit (radio signal transmission/reception unit 210) configured to execute radio communication with a mobile communication network in a first state in which a specific communication quality in the mobile communication network is guaranteed and the mobile communication network is operating normally, and in a second state in which available radio resources are more limited than in the first state, and a control unit (control unit 270) configured to execute connection with the mobile communication network only when a specific condition is satisfied in the second state.

An aspect of the present disclosure is a terminal (UE 200) including a communication unit (radio signal transmission/reception unit 210) configured to execute radio communication via a mobile communication network in a first state in which a specific communication quality in the mobile communication network is guaranteed and the mobile communication network is operating normally, and in a second state in which available radio resources are more limited than in the first state, and a control unit (control unit 270) configured to execute connection with the mobile communication network only at a specific timing in the second state.

### BRIEF DESCRIPTION OF DRAWINGS

[Fig. 1] Fig. 1 is an overall schematic configuration diagram of a radio communication system 10.
[Fig. 2] Fig. 2 is a diagram illustrating a configuration example of a radio frame, a subframe, and a slot used in the radio communication system 10.
[Fig. 3] Fig. 3 is a functional block configuration diagram of a gNB 100 and a UE 200.
[Fig. 4] Fig. 4 is a diagram illustrating an example of a communication sequence between a UE and a RAN according to Operation Example 1.
[Fig. 5] Fig. 5 is a diagram illustrating an example of patterns of types of NTN-connectable UEs according to Operation Example 1.
[Fig. 6] Fig. 6 is a diagram illustrating an example of a communication sequence between a UE and a RAN according to Operation Example 2.
[Fig. 7] Fig. 7 is a diagram illustrating an example of a communication sequence between a UE and a RAN (Dual Connectivity connection) according to Operation Example 2.
[Fig. 8] Fig. 8 is a diagram illustrating an example of a hardware configuration of the gNB 100 and the UE 200.
[Fig. 9] Fig. 9 is a diagram illustrating a configuration example of a vehicle 2001.

### DESCRIPTION OF EMBODIMENTS

Hereinafter, embodiments will be described based on the drawings. Note that the same or similar reference numerals are assigned to the same functions or configurations, and the description thereof will be omitted as appropriate.

### (1) Overall Schematic Configuration of Radio Communication System

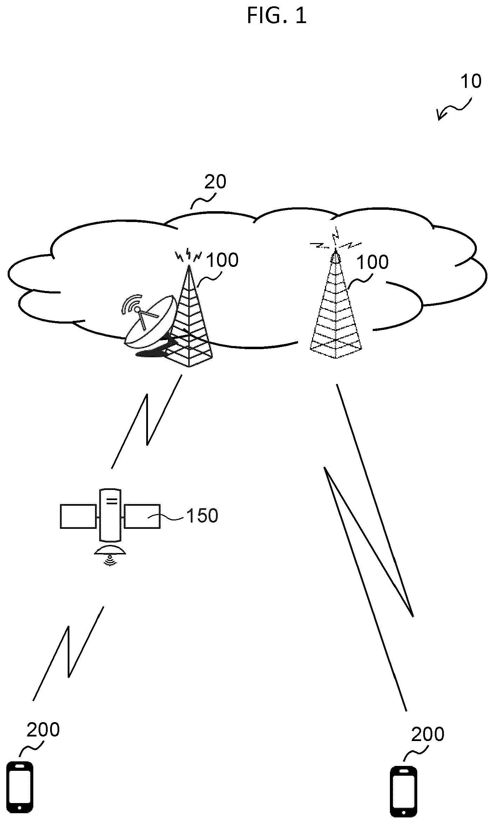

Fig. 1 is an overall schematic configuration diagram of a radio communication system 10 according to the present embodiment. The radio communication system 10 is a radio communication system according to a scheme called Beyond 5G, 5G Evolution, or 6G (hereinafter referred to as 6G), and includes a Radio Access Network 20 (hereinafter referred to as RAN 20) and a terminal 200 (User Equipment 200, hereinafter referred to as UE 200). Note that the radio communication system 10 may be a radio communication system according to specifications other than 6G, such as 5G New Radio (NR).

The RAN 20 includes a radio base station 100 (hereinafter referred to as gNB 100). Note that the specific configuration of the radio communication system 10 including the numbers of gNBs and UEs is not limited to the example shown in Fig. 1.

The RAN 20 actually includes a plurality of RAN Nodes, specifically, gNBs (or ng-eNBs), and is connected to a core network according to 6G. Note that the RAN 20 and the core network may be simply expressed as a "network". Further, a network formed by the UE 200, the RAN 20 (including the gNB 100), and the core network may be referred to as a mobile communication network (PLMN: Public Land Mobile Network).

The gNB 100 is a radio base station according to 6G, and executes radio communication according to 6G with the UE 200. The gNB 100 and the UE 200 can support Massive MIMO that generates a beam with higher directivity by controlling radio signals transmitted from a plurality of antenna elements, Carrier Aggregation (CA) that bundles and uses a plurality of component carriers (CCs), and Dual Connectivity (DC) that performs communication simultaneously between the UE and each of a plurality of NG-RAN Nodes.

The type of DC may be Multi-RAT Dual Connectivity (MR-DC) using a plurality of radio access technologies, or may be Dual Connectivity using only 6G. In MR-DC, any gNB may constitute a Master Node (MN), and another gNB may constitute a Secondary Node (SN).

In the present embodiment, the radio communication system 10 may include a Non-Terrestrial Network (hereinafter referred to as NTN). In the NTN, by using the NTN such as an artificial satellite 150 (hereinafter referred to as satellite 150), a service is provided to an area that cannot be covered by a Terrestrial Network (hereinafter referred to as TN) due to reasons such as cost. A more reliable service can be supplied by the NTN.

For example, the NTN is assumed to be applied to IoT (Internet of Things), ships, buses, trains, and critical communication. Further, the NTN has scalability by efficient multicast or broadcast. Note that radio resources available via the NTN may be more limited (fewer) than those of the TN. That is, the number of UEs connectable via the NTN may be more limited (fewer) than the number of UEs connectable via the TN.

The satellite 150 may have a function of a relay station apparatus, and a relay scheme may be either a transparent type (transparent) or a regenerative type (regenerative).

Note that a network including the gNB 100 and the UE 200 without including the satellite 150 may be referred to as a TN in the sense of contrasting with the NTN. The UE 200 may execute communication with the RAN 20 via the NTN, or may execute communication with the RAN 20 via the TN (that is, without via the satellite 150).

Further, the satellite 150 may have a function of a gNB (radio base station). The type of the satellite 150 is not particularly limited, and may be, for example, a Geostationary Orbit satellite (GEO) or a Low Earth Orbit satellite (LEO). Alternatively, a High-Altitude Platform Station (HAPS) may be used. The satellite 150 is not necessarily limited to these satellites, and may be interpreted to include Spaceborne/Airborne.

The gNB 100 may have an NTN gateway (not shown). The NTN gateway transmits a downlink (DL) signal to the satellite 150. The NTN gateway receives an uplink (UL) signal from the satellite 150.

The satellite 150 relays the downlink signal received from the NTN gateway to the UE 200. The satellite 150 relays the uplink signal received from the UE 200 to the NTN gateway. The satellite 150 may be interpreted as a TRP (Transmission-Reception Point), or may be interpreted as a repeater or a relay.

Further, the radio communication system 10 may support a plurality of Frequency Ranges (FRs). Specifically, the radio communication system 10 may support the following FRs.

- FR1: 410 MHz to 7.125 GHz
- FR2:
   - FR2-1: 24.25 GHz to 52.6 GHz
   - FR2-2: Over 52.6 GHz to 71 GHz

In FR1, a Sub-Carrier Spacing (SCS) of 15, 30, or 60 kHz is used, and a bandwidth (BW) of 5 to 100 MHz may be used. FR2 is a higher frequency than FR1, and an SCS of 60 or 120 kHz (240 kHz may be included) is used, and a bandwidth (BW) of 50 to 400 MHz may be used.

Furthermore, the radio communication system 10 may support a higher frequency band than the frequency band of FR2. Specifically, the radio communication system 10 can support a frequency band exceeding 52.6 GHz and up to 114.25 GHz.

Also, Cyclic Prefix-Orthogonal Frequency Division Multiplexing (CP-OFDM)/Discrete Fourier Transform - Spread (DFT-S-OFDM) having a larger Sub-Carrier Spacing (SCS) may be applied. Furthermore, DFT-S-OFDM may be applied not only to uplink (UL) but also to downlink (DL).

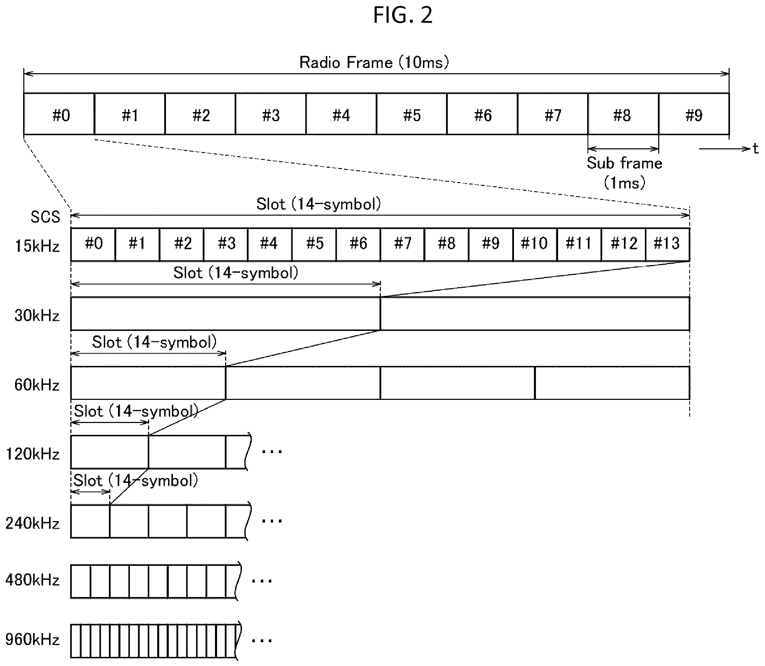

Fig. 2 shows a configuration example of a radio frame, a subframe, and a slot used in the radio communication system 10.

As shown in Fig. 2, one slot is composed of 14 symbols, and the larger (wider) the SCS becomes, the shorter the symbol period (and slot period) becomes. Note that the number of symbols constituting one slot does not necessarily have to be 14 symbols (for example, 28, 56 symbols). Further, the number of slots per subframe may vary depending on the SCS. Furthermore, the SCS may be wider than 240 kHz (for example, 480 kHz, 960 kHz as shown in Fig. 2).

Note that the time direction (t) shown in Fig. 2 may be called a time domain, a symbol period, a symbol time, or the like. Further, the frequency direction may be called a frequency domain, a Resource Block (RB), a Resource Block Group (RBG), a subcarrier, a BWP (Bandwidth part), or the like.

In the radio communication system 10, a mechanism for guaranteeing a certain communication quality may be introduced for the UE 200. The certain communication quality may simply mean the lowest communication quality that can be guaranteed, but is not necessarily limited to the lowest communication quality. For example, a plurality of communication qualities with different levels may be selectively guaranteed according to the situation of the network or the like, or communication qualities with different levels may be guaranteed according to the capability of the UE or the like.

The guarantee of communication quality may mean that a service having the communication quality can be definitely enjoyed during a guarantee period. In this sense, the service for which the communication quality is guaranteed may be interpreted as a service at the opposite extreme to a best effort type service. However, the level of the communication quality does not matter. For example, Ultra-Reliable and Low Latency Communications (URLLC) is a best effort type service in which the level of communication quality that can be enjoyed is reasonably high, but the communication quality is not necessarily guaranteed. On the other hand, if the communication quality can always be enjoyed even if the level of the communication quality is low, it can be said to be a service for which the communication quality is guaranteed.

The content of the communication quality is not particularly limited, but typically includes throughput, latency, the number of simultaneous UE connections, and the like. Further, the guarantee of communication quality may be secured not only in a state where the mobile communication network is operating normally but also in a state where the mobile communication network is not operating normally. Typical examples of the state where the mobile communication network is not operating normally include occurrence of a power outage, a failure of the network (equipment), and congestion of the network due to concentration of traffic to be processed. The state where the mobile communication network is not operating normally may be interpreted as a state where available radio resources are more limited (fewer) than in the state where the mobile communication network is operating normally (first state).

A UE subject to guarantee of communication quality may be called a High priority UE. The High priority UE may be read as a UE for which communication quality is guaranteed, a UE requesting communication quality guarantee, a lowest quality guaranteed UE, a Guaranteed UE, or a UE supporting a quality guarantee function.

A UE not subject to guarantee of communication quality may be called a Low priority UE. The Low priority UE may be read as a UE for which communication quality is not guaranteed, a UE not requesting communication quality guarantee, a non-guaranteed UE, or a UE not supporting a quality guarantee function.

Further, the UE 200 may operate as a High priority UE or a Low priority UE according to the capability or state of the UE 200. That is, whether or not the UE 200 is a High priority UE may be dynamically changed.

### (2) Functional Block Configuration of Radio Communication System

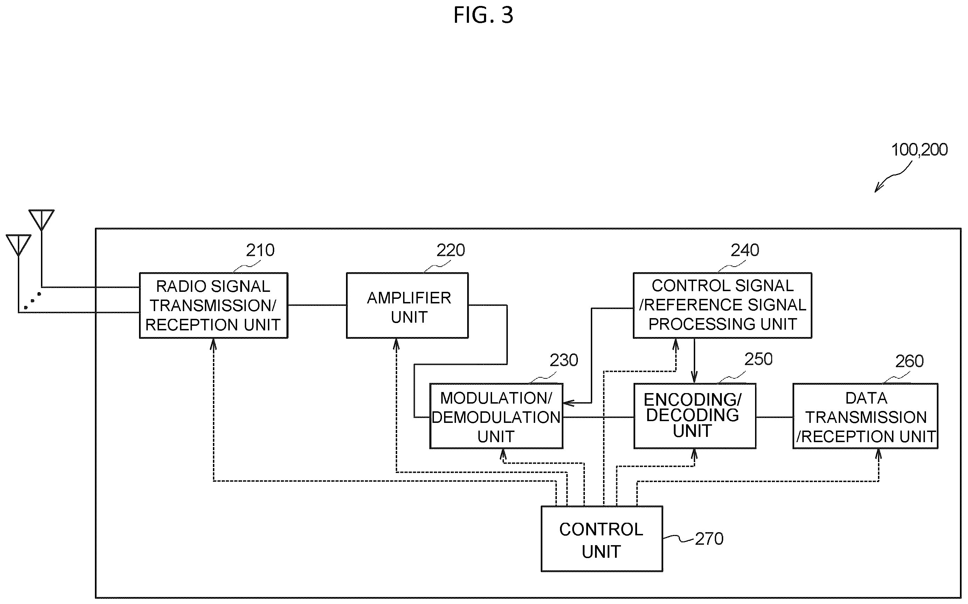

Next, a functional block configuration of the radio communication system 10 will be described. Specifically, a functional block configuration of the UE 200 will be described. Fig. 3 is a functional block configuration diagram of the gNB 100 and the UE 200.

As shown in Fig. 3, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

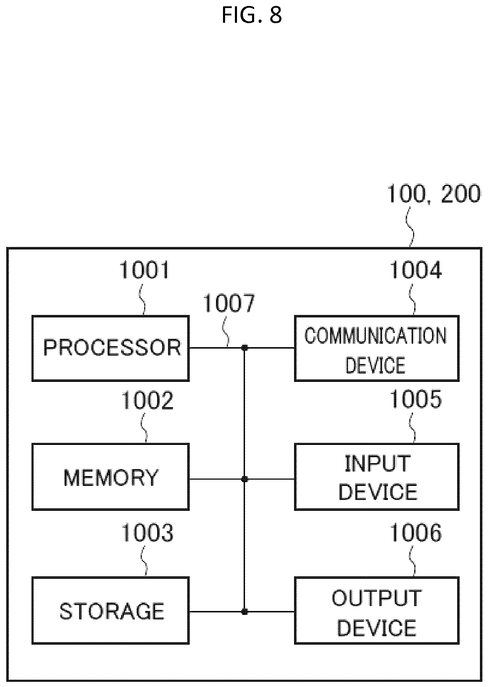

Note that in Fig. 3, only main functional blocks related to the description of the embodiment are shown, and it should be noted that the UE 200 (gNB 100) has other functional blocks (for example, a power supply unit and the like). Further, Fig. 3 shows a functional block configuration of the UE 200, and regarding a hardware configuration, refer to Fig. 8.

The radio signal transmission/reception unit 210 transmits and receives a radio signal according to 6G. The radio signal transmission/reception unit 210 can support Massive MIMO that generates a beam with higher directivity by controlling radio (RF) signals transmitted from a plurality of antenna elements, Carrier Aggregation (CA) that bundles and uses a plurality of component carriers (CCs), and Dual Connectivity (DC) that performs communication simultaneously between the UE and each of two NG-RAN Nodes.

The radio signal transmission/reception unit 210 may execute radio communication via the mobile communication network in a first state and a second state. In the present embodiment, the radio signal transmission/reception unit 210 may constitute a communication unit.

The first state may be interpreted as a state in which a specific communication quality in the mobile communication network is guaranteed and the mobile communication network is operating normally. The specific communication quality is not particularly limited, but for example, at least one of the following may be specified as a Key Performance Indicator (KPI) regarding the lowest quality guarantee. Note that a plurality of KPIs may be combined and applied.

- UE throughput
   - Lowest value/highest value in communication of the UE, and/or
   - Statistical value (for example, CDF (Cumulative Distribution Function) 50%, CDF 5% value, etc.).

- Latency
   - Lowest value/highest value in communication of the UE, and/or
   - Statistical value (e.g., CDF 50%, CDF 5% value, etc.)
- Cell capacity (total throughput of all UEs in a cell)
   - Lowest value/highest value and/or
   - Statistical value (e.g., CDF 50%, CDF 5% value, etc.)
- Reliability
   - Lowest value/highest value in communication of the UE, and/or
   - Statistical value (e.g., CDF 50%, CDF 5% value, etc.)
- Positioning
   - Lowest value/highest value in positioning accuracy of the UE, and/or
   - Statistical value (e.g., CDF 50%, CDF 5% value, etc.)

The second state may be interpreted as a state in which available radio resources are more limited than in the first state. The radio signal transmission/reception unit 210 may execute radio communication with the mobile communication network via a normal network available only in the first state in the first state, and via a specific network available also in the second state.

The normal network available only in the first state may be, for example, a Terrestrial Network (TN), and the specific network available also in the second state may be, for example, a Non-Terrestrial Network (NTN). In this case, the NTN, which has wide coverage and is less likely to be affected by disasters or the like compared to the TN, may be prepared as a backup network when the TN cannot be used due to a failure or the like or in a situation where connection of the UE 200 is restricted.

The amplifier unit 220 is configured with a PA (Power Amplifier)/LNA (Low Noise Amplifier) and the like. The amplifier unit 220 amplifies a signal output from the modulation/demodulation unit 230 to a predetermined power level. Further, the amplifier unit 220 amplifies an RF signal output from the radio signal transmission/reception unit 210.

The modulation/demodulation unit 230 executes data modulation/demodulation, transmission power setting, resource block allocation, and the like for each predetermined communication destination (gNB 100 and the like). In the modulation/demodulation unit 230, Cyclic Prefix-Orthogonal Frequency Division Multiplexing (CP-OFDM)/Discrete Fourier Transform - Spread (DFT-S-OFDM) may be applied. Further, DFT-S-OFDM may be used not only for uplink (UL) but also for downlink (DL).

The control signal/reference signal processing unit 240 executes processing regarding various control signals transmitted and received by the UE 200 and processing regarding various reference signals transmitted and received by the UE 200.

Specifically, the control signal/reference signal processing unit 240 receives various control signals transmitted from the gNB 100 via a predetermined control channel, for example, control signals of a Radio Resource Control Layer (RRC). Further, the control signal/reference signal processing unit 240 transmits various control signals to the gNB 100 via a predetermined control channel.

The control signal/reference signal processing unit 240 executes processing using a Reference Signal (RS) such as a Demodulation Reference Signal (DMRS) and a Phase Tracking Reference Signal (PTRS).

The DMRS is a reference signal (pilot signal) known between a base station and a terminal for each terminal for estimating a fading channel used for data demodulation. The PTRS is a reference signal for each terminal aimed at estimating phase noise which becomes a problem in a high frequency band.

Note that the reference signal may include a Channel State Information-Reference Signal (CSI-RS), a Sounding Reference Signal (SRS), and a Positioning Reference Signal (PRS) for position information, in addition to the DMRS and the PTRS.

Further, the channel includes a control channel and a data channel. The control channel may include a PDCCH (Physical Downlink Control Channel), a PUCCH (Physical Uplink Control Channel), a RACH (Random Access Channel, Downlink Control Information (DCI) including Random Access Radio Network Temporary Identifier (RA-RNTI)), a Physical Broadcast Channel (PBCH), and the like.

Further, the data channel includes a PDSCH, a PUSCH, and the like. Data may mean data transmitted via the data channel.

Further, the control signal/reference signal processing unit 240 may transmit capability information indicating terminal capability of the UE 200 to the network. For example, the control signal/reference signal processing unit 240 can transmit UE Capability Information regarding communication quality guarantee to the gNB 100.

For example, the control signal/reference signal processing unit 240 may transmit UE Capability Information indicating whether or not it has terminal capability necessary as a High priority UE, a level of communication quality that can be supported, and the like to the gNB 100.

The encoding/decoding unit 250 executes division/concatenation of data, channel coding/decoding, and the like for each predetermined communication destination (gNB 100 or another gNB).

Specifically, the encoding/decoding unit 250 divides data output from the data transmission/reception unit 260 into a predetermined size, and executes channel coding on the divided data. Further, the encoding/decoding unit 250 decodes data output from the modulation/demodulation unit 230, and concatenates the decoded data.

The data transmission/reception unit 260 executes transmission and reception of a Protocol Data Unit (PDU) and a Service Data Unit (SDU). Specifically, the data transmission/reception unit 260 executes assembly/disassembly and the like of PDUs/SDUs in a plurality of layers (Medium Access Control layer (MAC), Radio Link Control layer (RLC), Packet Data Convergence Protocol layer (PDCP), and the like). Further, the data transmission/reception unit 260 executes data error correction and retransmission control based on Hybrid ARQ (Hybrid automatic repeat request).

The control unit 270 controls each functional block constituting the UE 200. Particularly, in the present embodiment, the control unit 270 can execute control regarding guarantee of a specific communication quality in the mobile communication network.

Specifically, in the second state (state in which available radio resources are more limited than in the first state), the control unit 270 may execute connection with the mobile communication network only when a specific condition is satisfied. The specific condition may include, for example, the following situations.

First is a case where the UE 200 was already connected in the first state to the specific network (for example, NTN) used in the second state. Alternatively, it is a case where the UE 200 is a target of guarantee of the specific communication quality (High priority UE) in the first state.

In this way, when the UE 200 was already connected in the first state (state in which a specific communication quality in the mobile communication network is guaranteed and the mobile communication network is operating normally) to the specific network used in the second state, or when the UE 200 is a target of guarantee of the specific communication quality in the first state, the control unit 270 may execute connection with the mobile communication network in the second state.

Further, when the UE 200 is a target of guarantee of the specific communication quality also in the second state, the control unit 270 may execute connection with the mobile communication network in the second state. That is, regardless of whether or not the UE 200 was already connected in the first state to the specific network (for example, NTN) used in the second state, when the UE 200 is a target of guarantee of the specific communication quality also in the second state, connection with the mobile communication network may be executed in the second state.

Note that when the UE 200 does not fall under such a situation, for example, even if the UE 200 is not a target of guarantee of communication quality (Low priority UE), the control unit 270 may execute connection with the mobile communication network in the second state.

Further, in the second state, the control unit 270 may execute connection with the mobile communication network only at a specific timing. The specific timing may include, for example, the following timings.

First, a timing when it is recognized that the normal network (for example, TN) available only in the first state cannot be used due to a failure such as a power outage or congestion can be cited. Alternatively, a timing when a timer started after recognizing that the network cannot be used expires can be cited. Further, in this case, the number of times of attempting connection may be adjusted by a certain probability after the timer expires.

Further, the control unit 270 may control execution of Dual Connectivity (DC) via the TN and the NTN. Particularly, in the present embodiment, the control unit 270 may perform control so that the radio signal transmission/reception unit 210 can perform radio communication with the mobile communication network via the normal network (for example, TN) available only in the first state and the specific network (for example, NTN) available also in the second state (state in which available radio resources are more limited than in the first state), specifically, simultaneous connection to the TN and the NTN, in the first state (state in which a specific communication quality in the mobile communication network is guaranteed and the mobile communication network is operating normally).

When a failure occurs in the TN during execution of such DC (simultaneous connection to the TN and the NTN) (corresponding to the second state), the control unit 270 may continue radio communication with the mobile communication network via the specific network (NTN) in the second state.

In the present embodiment, the TN and the NTN are described as examples, but the specific network available also in the second state is not necessarily limited to such types of networks, and may be, for example, an ad hoc type network formed using a large zone radio base station, or an ad hoc type network formed using a mobile radio base station. Further, the normal network available only in the first state is not particularly limited to the TN, and may include the TN and the NTN, or may include a case where it is not clearly distinguished from the TN or the NTN. Further, the NTN does not necessarily have to have more limited available radio resources than the TN, and may have more available radio resources than the TN.

### (3) Operation of Radio Communication System

Next, the operation of the radio communication system 10 will be described. Specifically, the operation regarding the guarantee of communication quality in the radio communication system 10 (mobile communication network) will be described.

### (3.1) Premise and Issues

As described above, mobile communication using a public network is generally of a "best effort type". For this reason, a telecommunications carrier (network operator) providing a communication service by a mobile communication network cannot control an instantaneous increase in traffic volume. For example, if traffic increases explosively in a dense environment such as a concert, the minimum communication quality cannot be secured (for example, phone calls cannot be made, websites cannot be browsed, etc.).

Mission-critical use cases (for example, URLLC) have been discussed as use cases of 5G. However, providing a mission-critical communication service using a public network makes it impossible to achieve a desired communication quality (throughput, latency, the number of simultaneous connections, etc.) when the surrounding traffic increases as described above, or when the traffic within the mission-critical communication service increases.

In particular, in 6G, it is assumed that there will be many use cases requiring a certain communication quality guarantee, such as for specific industries. Considering such a situation, the importance of communication quality guarantee is further increasing not only for mission-critical cases but also for general users. A mechanism for securing the "lowest communication quality" is required for both general users and mission-critical use cases.

Further, in 6G, it is assumed that the lowest quality guarantee is required even when a power outage occurs or a network (equipment) fails. For example, when the Terrestrial Network (TN) becomes unavailable, it is assumed that the lowest quality guarantee is applied using the Non-Terrestrial Network (NTN).

However, generally, since NTN resources are more limited than TN resources, it is considered that the number of UEs for which the quality can be guaranteed is further limited. Furthermore, if the lowest quality guaranteed UEs simultaneously request connection (including retry) to the mobile communication network via the NTN, the resources may become tight, potentially inducing a new failure.

### (3.2) Operation Overview

Hereinafter, an operation example regarding the lowest quality guarantee capable of solving the above-described problems will be described. A system for realizing the lowest quality guarantee can be realized by the network operator guaranteeing a predetermined quality to the user with conditions based on a statistical value of the quality. The condition, the predetermined quality, and the statistical value may be assumed as follows.

- (Condition): Users for whom the lowest quality can be guaranteed are determined for each cell.

For example, the lowest quality guarantee may be secured only for X persons (number of UEs) in cell #1. If the number of users for whom the lowest quality can be guaranteed exceeds the capacity, the guarantee may not be provided or may not be able to be provided.

The lowest quality guarantee may be secured only when reception quality (RSRP: Reference Signal Received Power, RSRQ: Reference Signal Received Quality, SINR: Signal-to-Interference plus Noise power Ratio, etc.) such as a specific area/predetermined field strength is satisfied. For example, areas difficult to cover such as underwater and in the air may be excluded. Further, it may be a condition that the UE is not in an environment where radio waves are significantly attenuated, for example, the UE does not enter a room surrounded by twisted lead, or the user does not cover the antenna part with their hand.

### - (Predetermined quality)

- (Plan 1): The network notifies the UE of the lowest quality that can be secured according to the Capability of each UE. For example, for a Reduced UE Capability (RedCap) UE, throughput: XXX bps, latency: XXX ms may be secured, and for an enhanced Mobile Broadband (eMBB) UE (high-end UE), throughput: YYY bps, latency: YYY ms may be secured (YYY >= XXX). UEs for URLLC may be included.
- (Plan 2): Only the quality that can be secured by the Mandatory Capability is secured as the lowest quality. For example, 8-layer MIMO x 32CC CA x 1024QAM need not always be guaranteed as the lowest quality, and for example, the lowest quality achieved by 4-layer x 1CC x 64QAM may be guaranteed.

- (Statistical value): It may be secured that a statistical value of quality achieved within a predetermined period is higher than a threshold value. For example, average throughput for 1 minute: XXX bps, latency: XXX ms may be secured.

Particularly, in Operation Example 1 below, when a failure occurs in the TN, UEs capable of NTN connection may be restricted (coexistence with normal UEs). Furthermore, UEs subject to the lowest quality guarantee capable of NTN connection may be restricted according to UE capability or the like.

Further, in Operation Example 2 below, the timing at which the UE executes a connection request to the NTN may be restricted.

### (3.3) Operation Example 1

As described above, since NTN resources are more limited than TN resources, the number of UEs for which quality can be guaranteed is further limited. Therefore, not all UEs for which the lowest quality was guaranteed in the TN can receive the guarantee of the lowest quality as High priority UEs in the NTN as well.

Therefore, the following operation may be applied.

### - (Operation Example 1-1): Restrict UEs capable of NTN connection (coexistence with normal UEs).

Connection priorities of UEs already connected to the NTN, lowest quality guaranteed UEs, and normal UEs may be defined.

### - (Operation Example 1-2): Restrict lowest quality guaranteed UEs capable of NTN connection.

For example, classification may be applied to UEs subject to quality guarantee, such as high-priority UEs for which the lowest quality is always guaranteed, and UEs for which the lowest quality is guaranteed in normal times but is not guaranteed in the event of a failure. Charges corresponding to the class may be set.

### (3.3.1) Operation Example 1-1

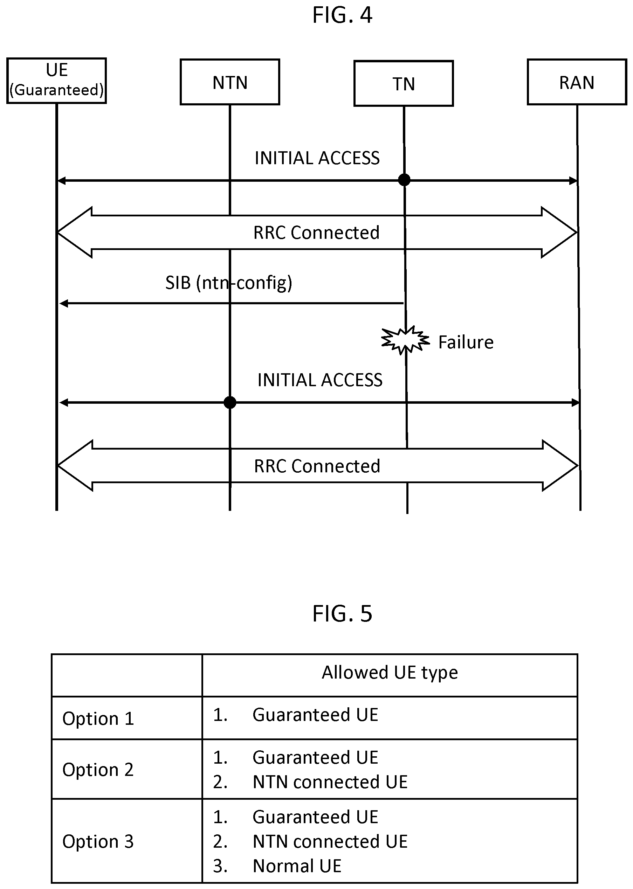

Fig. 4 shows an example of a communication sequence between a UE and a RAN according to Operation Example 1. As shown in Fig. 4, when a failure occurs in a TN (which may be referred to as a TN cell), the UE may execute cell selection (cell (re)selection) for an NTN cell and transmit a connection request (Initial Access).

The UE may explicitly/implicitly recognize the occurrence of a failure based on at least one of the following events (however, the recognition of the occurrence of a failure by the UE does not necessarily have to be a condition for executing the above-described operation).

- When a connectable cell could not be found even after executing cell search for X seconds or Y times.
- When access to the RAN or the core network was prohibited or not permitted.
- When X seconds have elapsed since the UE executed the connection request and the timer has expired, or when the connection request has been retransmitted Y times and the specified number of times has been exceeded.
- When a cause of failure broadcast from the core network is received or a specific cause is received.
- A combination of the above-described events.

Further, as shown in Fig. 4, the UE may acquire information regarding the configuration of NTN cells around the TN cell (which may be referred to as ntn-Config) from broadcast information (SIB: System Information Block) from the TN cell. Note that the acquisition timing of the SIB (ntn-Config) does not necessarily have to be the timing shown in Fig. 4, and may be, for example, an SIB receivable before completion of RRC connection.

Fig. 5 shows an example of patterns of types of NTN-connectable UEs according to Operation Example 1. When the UE requests connection to the NTN, as shown in Fig. 5, UEs capable of NTN connection may be restricted by any of the following options.

### - (Opt. 1): Permit use of the NTN only for lowest quality guaranteed UEs.

In this case, even a UE originally connected to the NTN may be disconnected if it is not a lowest quality guaranteed UE.

### - (Opt. 2): Permit use of the NTN for lowest quality guaranteed UEs and UEs already connected to the NTN.

A priority may be set between the lowest quality guaranteed UEs and the UEs originally connected to the NTN. For example, the lowest quality guaranteed UEs may be prioritized, and the UEs already connected to the NTN may be excluded depending on the situation of the network.

Further, an indicator indicating a priority according to the UE type or a priority irrelevant to the UE type may be introduced. When requesting connection to the NTN, the UE may transmit information regarding the priority together.

### - (Opt. 3): Permit use of the NTN for lowest quality guaranteed UEs, UEs already connected to the NTN, and normal UEs.

A priority may be set among the lowest quality guaranteed UEs, the UEs originally connected to the NTN, and the normal UEs. For example, the lowest quality guaranteed UEs may be prioritized, and the UEs already connected to the NTN and the normal UEs may be excluded depending on the situation of the network.

Further, an indicator indicating a priority according to the UE type or a priority irrelevant to the UE type may be introduced. When requesting connection to the NTN, the UE may transmit information regarding the priority together.

### (3.3.2) Operation Example 1-2

Also in this operation example, the UE may acquire information regarding the configuration of NTN cells around the TN cell (ntn-Config) from broadcast information (SIB) from the TN cell.

When the UE requests connection to the NTN, UEs capable of NTN connection may be restricted by any of the following options.

### - (Opt. 1): Permit use of the NTN for all lowest quality guaranteed UEs.

### - (Opt. 2): Permit use of the NTN for some lowest quality guaranteed UEs.

Among the lowest quality guaranteed UEs, classification may be performed, for example, into UEs for which the lowest quality is always guaranteed by the NTN, and UEs for which the lowest quality is guaranteed only in normal times by the TN.

Specifically, the method of classification may be included in the lowest quality guarantee request or permission. Further, apart from the request for the lowest quality guarantee in the TN, the lowest quality guarantee in the NTN may be requested.

The frequency of the class request may be when requesting the lowest quality guarantee, when reconnecting to the network (such as when the UE state changes (RRC IDLE/RRC CONNECTED)), when a related timer expires, on an on-demand basis (such as a timing when a service executed by the UE is switched), or at least any combination thereof.

The frequency of the class notification may be when notifying permission of the lowest quality guarantee, when a related timer expires, on an on-demand basis (such as a timing when a request is transmitted from the UE, a timing when a change becomes necessary in the network), or at least any combination thereof.

According to this operation example, at the time of a failure of the TN, UEs capable of NTN connection can be restricted, or lowest quality guaranteed UEs capable of NTN connection can be restricted, so that even when a failure occurs in the mobile communication network and available radio resources are more limited than in normal times, a certain communication quality guarantee can be continued.

### (3.4) Operation Example 2

In this operation example, when a failure or the like occurs in the TN, the UE may restrict the timing of requesting connection to the NTN. Note that as the failure here, four patterns may be assumed, and may be expressed as follows, respectively.

- At the time of RAN failure: loses coverage of a cell
- At the time of RAN restriction: access attempt is barred
- At the time of core network failure: timer XXX expires

The absence of a response from the core network may be determined by the elapse of a certain time (timer expiration or retransmission count excess) since the UE transmitted a specific message.

- At the time of core network restriction: not accepted by the network

This may mean that a request from the UE is not accepted by the core network.

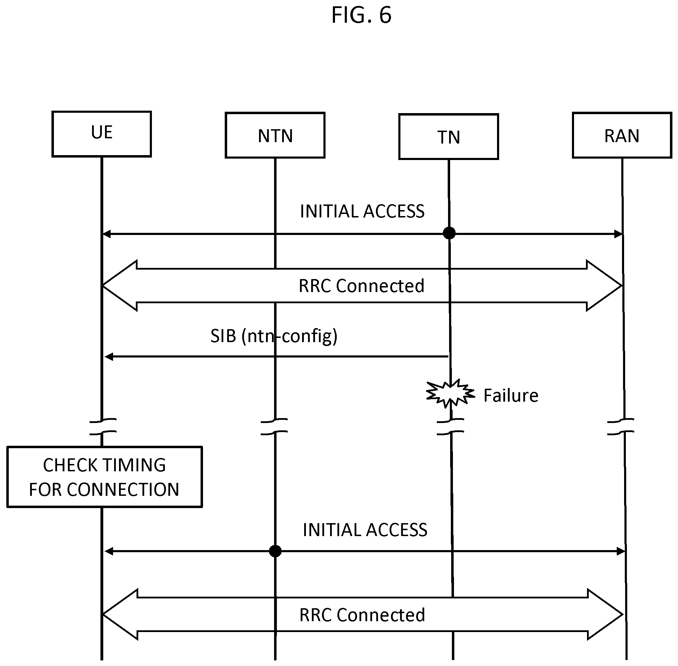

Fig. 6 shows an example of a communication sequence between a UE and a RAN according to Operation Example 2. As shown in Fig. 6, when a failure occurs in the TN, the UE may restrict the timing of requesting connection to the NTN cell.

Similar to Operation Example 1, the UE may explicitly/implicitly recognize the occurrence of a failure based on at least one of the following events (however, the recognition of the occurrence of a failure by the UE does not necessarily have to be a condition for executing the above-described operation).

- When a connectable cell could not be found even after executing cell search for X seconds or Y times.
- When access to the RAN or the core network was prohibited or not permitted.
- When X seconds have elapsed since the UE executed the connection request and the timer has expired, or when the connection request has been retransmitted Y times and the specified number of times has been exceeded.
- When a cause of failure broadcast from the core network is received or a specific cause is received.
- A combination of the above-described events.

Further, as shown in Fig. 6, the UE may acquire information regarding the configuration of NTN cells around the TN cell (ntn-Config) from broadcast information (SIB) from the TN cell.

The UE may transmit a connection request via the NTN based on any of the following.

### - (Opt. 1): Follow a restriction operation similar to existing 5G (NR).

- At the time of RAN failure, lowest quality guaranteed UEs transmit connection requests all at once.
- At the time of RAN restriction, the UE transmits a connection request according to a certain probability after expiration of a specified timer (even if the timer expires, the connection request is transmitted according to the specified probability).
- At the time of core failure or restriction, a connection request is transmitted after expiration of a timer.

### - (Opt. 2): Even at the time of RAN failure, transmit a connection request after expiration of a timer.

When the above-described event of explicitly/implicitly recognizing the occurrence of a failure occurs, the UE may start a timer. Further, even if the timer expires, the connection request may be transmitted with a certain probability, or a timer value and/or probability having a different value for each UE may be set.

The timer value may be assumed to be set in advance from the network, a constant value may always be set, or it may be set variably for each retry.

- (Opt. 3): The UE executes Dual Connectivity (DC) with the TN and the NTN, secures connection with both networks, and when any of the following events occurs, transmits and receives various signals (including reference signals) and data only via the NTN (redundancy of access paths to the RAN).

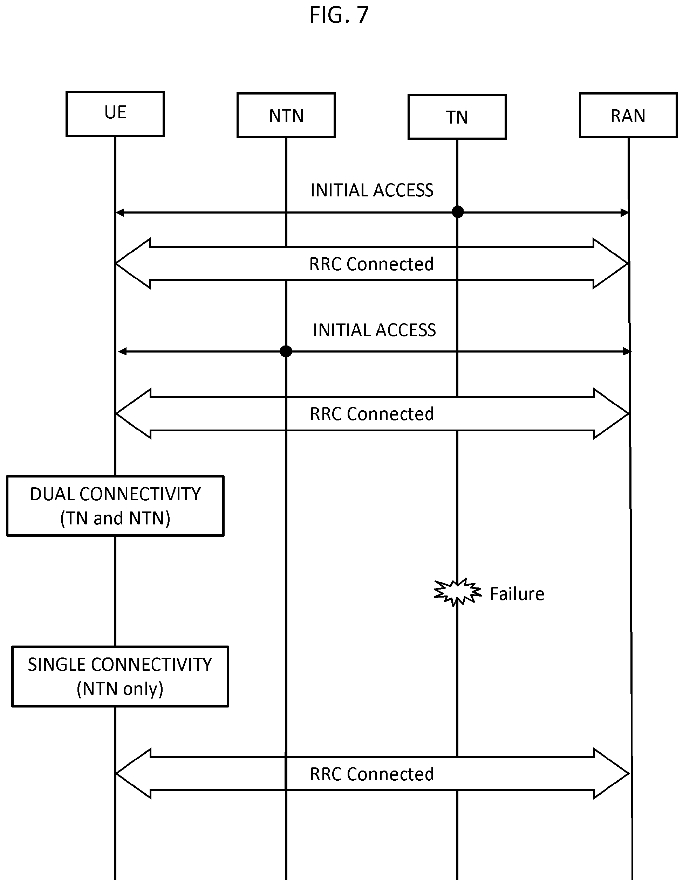

Fig. 7 shows an example of a communication sequence between a UE and a RAN (Dual Connectivity connection) according to Operation Example 2.

Similar to Operation Example 1, the UE may explicitly/implicitly recognize the occurrence of a failure based on at least one of the following events (however, the recognition of the occurrence of a failure by the UE does not necessarily have to be a condition for executing the above-described operation).

- When a connectable cell could not be found even after executing cell search for X seconds or Y times.
- When access to the RAN or the core network was prohibited or not permitted.
- When X seconds have elapsed since the UE executed the connection request and the timer has expired, or when the connection request has been retransmitted Y times and the specified number of times has been exceeded.
- When a cause of failure broadcast from the core network is received or a specific cause is received.
- A combination of the above-described events.

Note that also in this case, the UE may acquire information regarding the configuration of NTN cells around the TN cell (ntn-Config) from broadcast information (SIB) from the TN cell.

Further, the UE may always secure the DC state, or may secure the DC state over a certain period at certain intervals.

In the DC state, when a failure occurs on the TN side, the UE executes communication with the RAN only via the NTN. Note that if not in the DC state, any of the above-described (Opt. 1) or (Opt. 2) operations may be applied. On the other hand, in the case of the DC state, the UE may operate as follows.

- Execute communication with the RAN using both the TN and the NTN, or
- When the TN is available, the NTN is set to a standby state and is not used for communication.

Further, the cycle and period of DC may be specified as a timer, or may be instructed from the network by higher layer signaling or the like.

According to this operation example, when a failure or the like occurs in the TN, the UE can restrict the timing of requesting connection to the NTN, so that even when a failure occurs in the mobile communication network and available radio resources are more limited than in normal times, a certain communication quality guarantee can be continued.

### (4) Other Embodiments

Although the embodiment has been described above, it is obvious to those skilled in the art that the present disclosure is not limited to the description of the embodiment, and various modifications and improvements are possible.

For example, in the above-described embodiment, the use of 6G was assumed, but the above-described mechanism of the lowest quality guarantee may be provided in a radio communication scheme other than 6G, such as 5G/NR.

In the above-described embodiment, terms such as communication quality, quality, radio quality, and performance are used, but these terms may be interpreted as having the same meaning.

Further, in the above description, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-dedicated may be read interchangeably. Similarly, common, shared, group-common, UE-common, and UE-shared may be read interchangeably.

The block configuration diagram (Fig. 3) used in the description of the above-described embodiment shows blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

Furthermore, the above-described gNB 100 and UE 200 (the apparatuses) may function as a computer that performs the processing of the radio communication method of the present disclosure. Fig. 8 is a diagram illustrating an example of a hardware configuration of the apparatus. As shown in Fig. 8, the apparatus may be configured as a computer apparatus including a processor 1001, a memory 1002, a storage 1003, a communication device 1004, an input device 1005, an output device 1006, a bus 1007, and the like.

Note that in the following description, the word "apparatus" can be read as a circuit, a device, a unit, or the like. The hardware configuration of the apparatus may be configured to include one or a plurality of the apparatuses shown in the figure, or may be configured not to include some of the apparatuses.

Each functional block of the apparatus (see Fig. 3) is realized by any hardware element of the computer apparatus or a combination of the hardware elements.

Further, each function in the apparatus is realized by causing hardware such as the processor 1001 and the memory 1002 to read predetermined software (program) so that the processor 1001 performs computation and controls communication by the communication device 1004, or controls at least one of reading and writing of data in the memory 1002 and the storage 1003.

The processor 1001 controls the entire computer by operating an operating system, for example. The processor 1001 may be composed of a Central Processing Unit (CPU) including an interface with peripheral devices, a control device, an arithmetic device, a register, and the like.

Further, the processor 1001 reads a program (program code), a software module, data, and the like from at least one of the storage 1003 and the communication device 1004 into the memory 1002, and executes various processes according to these. As the program, a program that causes a computer to execute at least a part of the operations described in the above-described embodiment is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be composed of at least one of, for example, a Read Only Memory (ROM), an Erasable Programmable ROM (EPROM), an Electrically Erasable Programmable ROM (EEPROM), and a Random Access Memory (RAM). The memory 1002 may be called a register, a cache, a main memory (main storage device), or the like. The memory 1002 can store a program (program code), a software module, and the like capable of executing the method according to an embodiment of the present disclosure.

The storage 1003 is a computer-readable recording medium, and may be composed of at least one of, for example, an optical disc such as a Compact Disc ROM (CD-ROM), a hard disk drive, a flexible disk, a magneto-optical disk (for example, a compact disc, a digital versatile disc, a Blu-ray (registered trademark) disc), a smart card, a flash memory (for example, a card, a stick, a key drive), a floppy (registered trademark) disk, and a magnetic strip. The storage 1003 may be called an auxiliary storage device. The above-described recording medium may be, for example, a database, a server, or other appropriate media including at least one of the memory 1002 and the storage 1003.

The communication device 1004 is hardware (transmission/reception device) for performing communication between computers via at least one of a wired network and a wireless network, and is also called, for example, a network device, a network controller, a network card, a communication module, or the like.

The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that implements output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the apparatus may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardware pieces.

Further, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling, and other signals or combinations of these. Also, RRC signaling may be referred to as an "RRC message," and can be, for example, an RRC connection setup message, an RRC connection reconfiguration message, and so on.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next-generation system extended based on these. Further, a plurality of systems may be combined (for example, a combination of at least one of LTE and LTE-A and 5G, etc.) and applied.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW may be considered, but not limited thereto). Although the case where there is one other network node other than the base station has been illustrated above, it may be a combination of a plurality of other network nodes (for example, MME and S-GW).

Information, signals (information, etc.) can be output from a higher layer (or a lower layer) to a lower layer (or a higher layer). They may be input and output via a plurality of network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

The terms "system" and "network" used in the present disclosure are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality (for example, three) of cells (also called sectors). When a base station accommodates a plurality of cells, the entire coverage area of the base station can be divided into a plurality of smaller areas, and each smaller area can also provide communication services by a base station subsystem (for example, a compact base station for indoor use (Remote Radio Head: RRH)).

The term "cell" or "sector" refers to a part or the whole of the coverage area of at least one of a base station and a base station subsystem that performs communication service in this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be called a transmission apparatus, a reception apparatus, a communication apparatus, or the like. Note that at least one of a base station and a mobile station may be a device mounted on a moving body, the moving body itself, or the like. The moving body may be a vehicle (for example, a car, an airplane, etc.), a moving body that moves unmanned (for example, a drone, an autonomous driving car, etc.), or a robot (manned type or unmanned type). Note that at least one of a base station and a mobile station includes an apparatus that does not necessarily move during communication operation. For example, at least one of a base station and a mobile station may be an Internet of Things (IoT) device such as a sensor.

Further, the base station in the present disclosure may be read as a mobile station (user terminal, the same applies hereinafter). For example, each aspect/embodiment of the present disclosure may be applied to a configuration in which communication between a base station and a mobile station is replaced with communication between a plurality of mobile stations (for example, may be called Device-to-Device (D2D), Vehicle-to-Everything (V2X), etc.). In this case, the mobile station may have the functions that the base station has. Further, words such as "uplink" and "downlink" may be read as words corresponding to terminal-to-terminal communication (for example, "side"). For example, an uplink channel, a downlink channel, and the like may be read as a side channel (or sidelink).

Similarly, the mobile station in the present disclosure may be read as a base station. In this case, the base station may have the functions that the mobile station has.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or a plurality of symbols in the time domain. Further, a mini-slot may be called a sub-slot. A mini-slot may be composed of a smaller number of symbols than a slot. A PDSCH (or PUSCH) transmitted in a time unit larger than a mini-slot may be called PDSCH (or PUSCH) mapping type A. A PDSCH (or PUSCH) transmitted using a mini-slot may be called PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be called a Transmission Time Interval (TTI), a plurality of consecutive subframes may be called a TTI, or one slot or one mini-slot may be called a TTI. That is, at least one of a subframe and a TTI may be a subframe (1 ms) in existing LTE, may be a period shorter than 1 ms (for example, 1 to 13 symbols), or may be a period longer than 1 ms. Note that the unit representing the TTI may be called a slot, a mini-slot, or the like instead of a subframe.

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTls (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," a "pilot signal," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

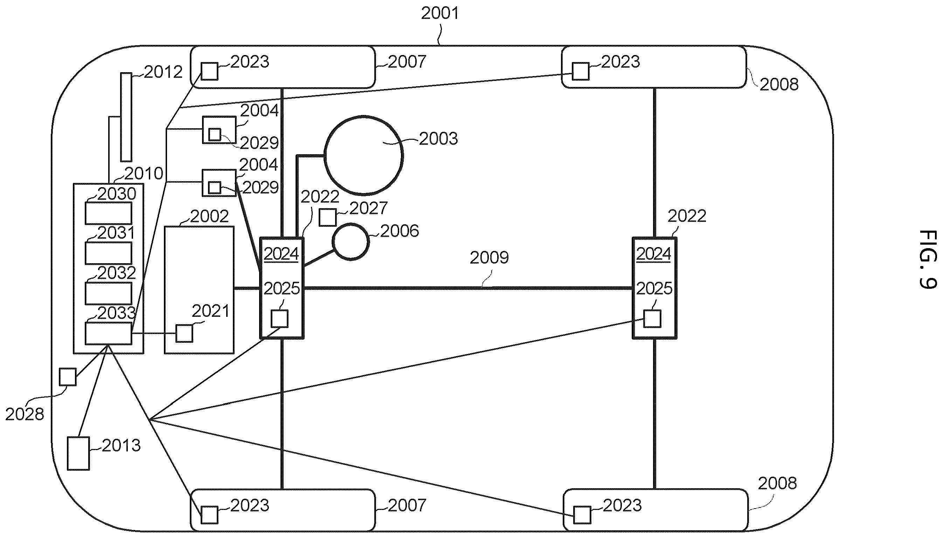

FIG. 9 shows an example of the configuration of the vehicle 2001. As shown in FIG. 9, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 ~ 2029, an information service unit 2012, and a communication module 2013.

The drive unit 2002 is composed of, for example, an engine, a motor, and an engine-motor hybrid. The steering unit 2003 includes at least a steering wheel and is configured to steer at least one of the front and rear wheels based on the operation of the steering wheel operated by the user. The electronic control unit 2010 consists of a microprocessor 2031, a memory (ROM, RAM) 2032 and communication ports (IO ports) 2033. The electronic control unit 2010 receives signals from various sensors 2021~2027 provided in the vehicle. The electronic control unit 2010 may be referred to as an ECU (Electronic Control Unit).

The signals from the various sensors 2021~2028 include a current signal from a current sensor 2021 for sensing the current of a motor, a speed signal of a front wheel and a rear wheel acquired by an rpm sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal depressing amount signal acquired by an accelerator pedal sensor 2029, a brake pedal depressing amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 comprises various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to the occupants of the vehicle 2001 by utilizing information acquired from an external device via the communication module 2013 or the like.

The information service unit 2012 may include an input device (e.g. keyboard, mouse, microphone, switch, button, sensor, touch panel, etc.) that accepts input from the outside or an output device (e.g. displays, speakers, LED lamps, touch panels, etc.) that performs output to the outside.

A driver assistance system unit 2030 consists of various devices, such as millimeter-wave radar, LiDAR (Light Detection and Ranging), camera, positioning locator (e.g. GNSS), map information (e.g. high-definition (HD) maps, self-driving car (AV) maps, etc.), gyro system (e.g. IMU (Inertial Measurement Unit), INS (Inertial Navigation System), etc.), Al (Artificial Intelligence) chip, AI processor, which are used to provide functions to prevent accidents or reduce the driver's driving load, and one or more ECUs that control these devices. The driver assistance system unit 2030 also transmits and receives various information via the communication module 2013 to realize a driver assistance function or an automatic driving function.

The communication module 2013 can communicate with the microprocessor 2031 and components of the vehicle 2001 via a communication port. For example, the communication module 2013 transmits and receives data via the communication port 2033 to and from the microprocessor 2031, the memory (ROM, RAM)2032, and the sensors 2021~2028 in the drive unit 2002, the steering unit 2003, the accelerator pedal 2004, the brake pedal 2005, the shift lever 2006, the left and right front wheels 2007, the left and right rear wheels 2008, the axle 2009, and the electronic control unit 2010 in the vehicle 2001.

The communication module 2013 is a communication device that can be controlled by the microprocessor 2031 of the electronic control unit 2010 and can communicate with external devices. For example, it transmits and receives various information to and from external devices via radio communication. The communication module 2013 may be either inside or outside the electronic control unit 2010. The external device may be, for example, a base station, a mobile station, etc.

The communication module 2013 may transmit at least one of the signals from the various sensors 2021 to 2028 input to the electronic control unit 2010 described above, information obtained based on the signals, and information based on input from the outside (user) obtained via the information service unit 2012 to an external apparatus via radio communication. The electronic control unit 2010, the various sensors 2021 to 2028, the information service unit 2012, and the like may be called an input unit that accepts input. For example, the PUSCH transmitted by the communication module 2013 may include information based on the input.

The communication module 2013 receives various kinds of information (traffic information, signal information, Inter-vehicular distance information, etc.) transmitted from an external device and displays them to the information service unit 2012 provided in the vehicle. The communication module 2013 also stores various information received from external devices in the memory 2032 available by the microprocessor 2031. Based on the information stored in the memory 2032, the microprocessor 2031 may the control drive unit 2002, the steering unit 2003, the accelerator pedal 2004, the brake pedal 2005, the shift lever 2006, the left and right front wheels 2007, the left and right rear wheels 2008, the axle 2009, the sensors 2021~2028, etc. provided in the vehicle 2001.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure defined by the description of the scope of claims. Therefore, the description of the present disclosure is for the purpose of illustration and description, and does not have any restrictive meaning to the present disclosure.

### (Supplementary Note)

The above-described disclosure may be expressed as follows.

The first feature is a terminal comprising: a communication unit configured to execute radio communication with a mobile communication network in a first state in which a specific communication quality in the mobile communication network is guaranteed and the mobile communication network is operating normally, and in a second state in which available radio resources are more limited than in the first state; and a control unit configured to execute connection with the mobile communication network only when a specific condition is satisfied in the second state.

The second feature is the terminal according to the first feature, wherein when the terminal was already connected in the first state to a specific network used in the second state, or when the terminal is a target of guarantee of the specific communication quality in the first state, the control unit executes connection with the mobile communication network in the second state.

The third feature is the terminal according to the first or second feature, wherein when the terminal is a target of guarantee of the specific communication quality also in the second state, the control unit executes connection with the mobile communication network in the second state.

The fourth feature is a terminal comprising: a communication unit configured to execute radio communication via a mobile communication network in a first state in which a specific communication quality in the mobile communication network is guaranteed and the mobile communication network is operating normally, and in a second state in which available radio resources are more limited than in the first state; and a control unit configured to execute connection with the mobile communication network only at a specific timing in the second state.

The fifth feature is the terminal according to the fourth feature, wherein the communication unit executes, in the first state, radio communication with the mobile communication network via a normal network available only in the first state and a specific network available also in the second state, and the control unit continues radio communication with the mobile communication network via the specific network in the second state.

### DESCRIPTION OF REFERENCE NUMERALS

10 Radio communication system
20 RAN
100 gNB
150 Satellite
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rpm sensor
2023 Air pressure sensor
2024 Speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port

## Claims

1. A terminal comprising:
a communication unit configured to execute radio communication with a mobile communication network in a first state in which a specific communication quality in the mobile communication network is guaranteed and the mobile communication network is operating normally, and in a second state in which available radio resources are more limited than in the first state; and
a control unit configured to execute connection with the mobile communication network only when a specific condition is satisfied in the second state.

2. The terminal according to claim 1, wherein the control unit executes connection with the mobile communication network in the second state, when the terminal was already connected in the first state to a specific network used in the second state, or when the terminal is a target of guarantee of the specific communication quality in the first state.

3. The terminal according to claim 1, wherein the control unit executes connection with the mobile communication network in the second state, when the terminal is a target of guarantee of the specific communication quality also in the second state.

4. A terminal comprising:
a communication unit configured to execute radio communication via a mobile communication network in a first state in which a specific communication quality in the mobile communication network is guaranteed and the mobile communication network is operating normally, and in a second state in which available radio resources are more limited than in the first state; and
a control unit configured to execute connection with the mobile communication network only at a specific timing in the second state.

5. The terminal according to claim 4, wherein
the communication unit executes, in the first state, radio communication with the mobile communication network via a normal network available only in the first state and a specific network available also in the second state, and
the control unit continues radio communication with the mobile communication network via the specific network in the second state.

6. A radio communication method in a terminal, the method comprising:
a step of executing radio communication with a mobile communication network in a first state in which a specific communication quality in the mobile communication network is guaranteed and the mobile communication network is operating normally, and in a second state in which available radio resources are more limited than in the first state; and
a step of executing connection with the mobile communication network only when a specific condition is satisfied in the second state.
